# EUROPÄISCHE PATENTSCHRIFT

(11) **EP 2 145 847 B1**
(45) Veröffentlichungstag und Bekanntmachung des Hinweises auf die Patenterteilung: **13.02.2013**
(21) Anmeldenummer: 09006637.4
(22) Anmeldetag: 16.05.2009
(51) Int. Cl.: B65G 53/46

(54) **Zellenradschleuse**
Cellular wheel sluice
Vanne à roue cellulaire

(30) Priorität: 17.07.2008 DE 102008033629
(43) Veröffentlichungstag der Anmeldung: 20.01.2010
(73) Patentinhaber: Coperion GmbH, 70469 Stuttgart (DE)
(72) Erfinder: Schöllhorn, Thomas, 88410 Hauerz (DE); Zinser, Bruno, 88289 Waldburg (DE); Adomeit, Holger, 88213 Ravensburg-Dürnast (DE); Knill, Jürgen, 88085 Langenargen (DE); Huber, Enver, Boris, 88250 Weingarten (DE)
(74) Vertreter: Hofmann, Matthias

(56) Entgegenhaltungen:
- DE-A1- 10 116 909
- DE-C1- 19 936 136

## Beschreibung

Die Erfindung betrifft eine Zellenradschleuse mit einem Zellenradgehäuse und einem Zellenrad.

Wenn Verunreinigungen des mit der Zellenradschleuse zu dosierenden Schüttguts ausgeschlossen werden sollen, muss verhindert sein, dass das Zellenrad beim Umlaufen im Zellenradgehäuse unerwünscht mit dem Zellenradgehäuse in Kontakt kommt, da ein derartiger Kontakt zu unerwünschtem Abrieb führen könnte.

Es ist eine Aufgabe der vorliegenden Erfindung, ein Zellenrad der eingangs genannten Art derart weiterzubilden, dass ein unerwünschter mechanischer Kontakt des Zellenrades mit dem Zellenradgehäuse sicher erfasst wird.

Diese Aufgabe ist erfindungsgemäß gelöst durch eine Zellenradschleuse mit den in Anspruch 1 angegebenen Merkmalen.

Erfindungsgemäß wurde erkannt, dass eine Zusatzkontakterfassung mit einer Logikschaltung beim Einsatz einer Zellenradschleuse mit einem Zellenrad und einem Zellenradgehäuse aus elektrisch leitfähigem Material zur sicheren Erfassung eines unerwünschten mechanischen Kontakts zwischen dem Zellenrad und dem Zellenradgehäuse genutzt werden kann. Das ohmsche Widerstandsbauteil verhindert dabei, dass sich das Zellenrad bzw. das Zellenradgehäuse im Betrieb unerwünscht elektrostatisch auflädt. Das Zellenrad kann einseitig oder beidseitig Kupplungen zur drehfesten Verbindung mit jeweils einem Wellenstummel aufweisen. Dies erleichtert eine Demontage des Zellenrades beispielsweise zu Wartungsarbeiten im Anschluss an eine Erfassung eines unerwünschten Zusatzkontaktes.

Die Logikschaltung kann neben einer Zusatzkontakterfassung bei umlaufendem Betrieb des Zellenrades den Zusatzkontakt auch während eines Stillstandes des Zellenrades erfassen. Dies dient insbesondere Qualitätssicherungszwecken.

Eine Logikschaltung nach Anspruch 2 kann insbesondere dann das Vorliegen eines elektrischen Zusatzkontaktes anzeigen, wenn der ohmsche Widerstand einen vorgegebenen Grenzwert unterschreitet. Eine derartige Bedingung für das Vorliegen eines elektrischen Zusatzkontaktes lässt sich einfach überwachen. Die Erfassung kann über das ohmsche Widerstands-Bauteil durch Vermessung insbesondere eines Gleichspannungs-Abfalls an diesem erfolgen und ist dabei betriebssicher möglich und kann empfindlich ausgewertet werden.

Durch Einsatz eines Drehzahlsensors nach Anspruch 3 ist eine Korrelation eines erfassten Zusatzkontaktes mit der Drehzahl zur Vermeidung von Fehlerfassungen des elektrischen Zusatzkontaktes gewährleistet. Derartige Fehlerfassungen können sich beispielsweise aufgrund von Feuchtigkeit des mit der Zellenradschleuse zu dosierenden Schüttguts ergeben. Der Drehzahlsensor kann zum Beispiel induktiv ausgeführt sein.

Ausführungen von Isolationseinheiten nach den Ansprüchen 4 bis 9 haben sich als betriebssicher und standfest herausgestellt. Der mindestens eine Isolationsring nach Anspruch 6 kann beispielsweise aus Kunststoff und insbesondere aus PA 6 ausgeführt sein. Der mindestens eine Isolationsring kann die Isolationsschicht im Bereich von radial verlaufenden Umfangsstufen der Zellenradwelle ergänzen. Es können auch mehrere derartige Isolationsringe vorgesehen sein. Die Isolierhülse nach Anspruch 7 kann ebenfalls aus Kunststoff und beispielsweise aus POM ausgeführt sein. Auch die Isolationsschicht auf dem antriebsseitigen Wellenabschnitt nach Anspruch 8 kann als Keramikbeschichtung ausgeführt sein. Die Passfeder nach Anspruch 9 kann ebenfalls aus Kunststoff und beispielsweise aus PEEK ausgeführt sein.

Bei Einsatz einer Schleifringanordnung nach Anspruch 10 kann der Ausfall beispielsweise eines der Ringkontakte toleriert werden. Die Schleifringanordnung kann zum Beispiel acht voneinander unabgängige Ringkontakte aufweisen.

Ein Datenspeicher nach Anspruch 11 erlaubt eine nachträgliche Auswertung insbesondere des zeitlichen Verlaufs erfasster Zusatzkontakt-Messungen. Auch eine statistische Auswertung ist möglich.

Eine Integration der Logikschaltung nach Anspruch 12 erleichtert eine Demontage der Zellenradschleuse.

Eine Zusatzkontaktanzeige nach Anspruch 13 lässt sich einfach ablesen.

Eine Ausführung der Logikschaltung nach Anspruch 14 ermöglicht eine Erfassung tatsächlich relevanter Kontakte des Zellenrades am Zellenradgehäuse, ohne dass irrelevante Messereignisse irrtümlich als relevante Zusatzkontakte angezeigt werden.

Ausführungsbeispiele der Erfindung werden nachfolgend anhand der Zeichnung näher erläutert. In dieser zeigen:
- Fig. 1: eine Explosionsdarstellung einer Zellenradschleuse mit einer eine Logikschaltung aufweisenden Einrichtung zur Detektion eines un- erwünschten Kontaktes zwischen einem Zellenrad und einem Zellenradgehäuse;
- Fig. 2: eine teilweise in einem axialen Querschnitt dargestellte Seitenansicht der Zellenradschleuse;
- Fig. 3: zum Großteil im axialen Längsschnitt eine die Logikschaltung beinhaltende Baugruppe, die in einem Gehäuseabschnitt untergebracht ist, welches im Bereich einer Wellenstummel-Steckkupplung einer Welle einer weiteren Ausführung des Zellenrades angeordnet ist;
- Fig. 4: eine Platine der Logikschaltung in einer Aufsicht;
- Fig. 5: einen Antriebs-Wellenstummel des Zellenrades in einer Seitenansicht; und
- Fig. 6: einen dem Antriebs-Wellenstummel gegenüberliegenden und der Logikschaltung zugeordneten Wellenstummel des Zellenrades in einer Seitenansicht.

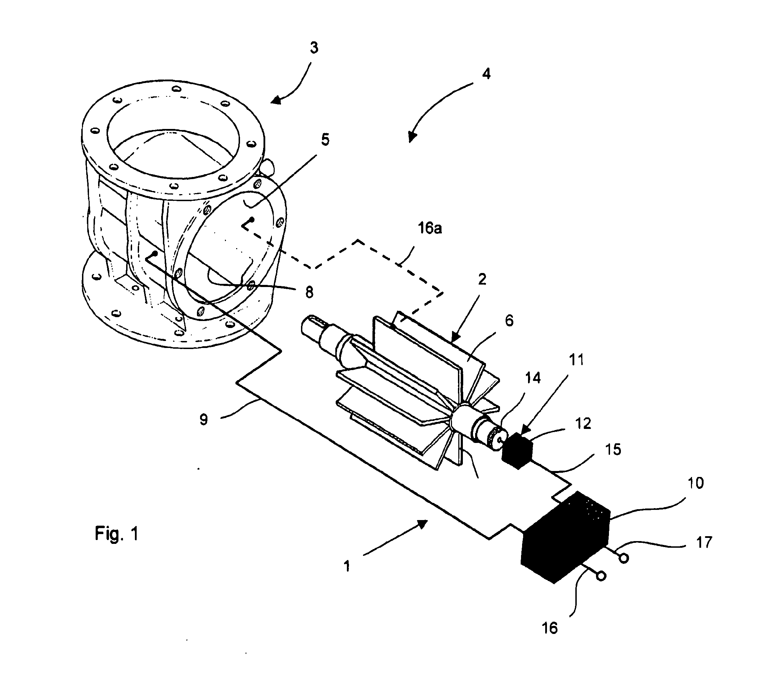

Fig. 1 zeigt in einer schematischen Explosionsdarstellung ein Funktionsprinzip einer Detektionseinrichtung 1 zur Erfassung eines unerwünschten Kontaktes zwischen einem Zellenrad 2 und einem Zellenradgehäuse 3. Das Zellenrad 2 und das Zellenradgehäuse 3 sind Bestanteile einer insgesamt mit 4 bezeichneten Zellenradschleuse. Im montierten Zustand ist das Zellenrad 2 in einen zylindrischen Aufnahmeraum 5 im Zellenradgehäuse 3 eingesetzt. Zwischen benachbarten Flügeln 6 des Zellenrades 2, in der Figur 1 nicht dargestellten Zellenradseitendeckeln und der Innenwand des Aufnahmeraums 5 sind Dosierkammern für Schuttgut gebildet.

Der Aufnahmeraum 5 verbindet einen Einlauf 7 der Zellenradschleuse 4 mit einem Auslauf 8.

Die Detektionseinrichtung 1 ist nicht auf den in der Zeichnung dargestellten Typ einer Zellenradschleuse beschränkt, sondern kann auch bei anderen bekannten Varianten von Zellenradschleusen, beispielsweise bei Durchblasschleusen, zum Einsatz kommen.

Das Zellenradgehäuse 3 steht über eine Signalleitung 9 mit einem Detektionsmodul 10 der Detektionseinrichtung 1 elektrisch in Verbindung. Im Detektionsmodul 10 ist eine noch zu beschreibende Logikschaltung untergebracht. Das Detektionsmodul 10 ist bei montierter Zellenradschleuse 4 im Zellenradgehäuse 3 untergebracht.

Über eine Schleifringanordnung 11 mit einem gehäusefesten Schleifring-Bauteil 12 und einem fest mit einem Wellenstummel 13 des Zellenrades 2 verbundenen, also wellenfesten Schleifring-Bauteil 14 sowie über eine weitere Signalleitung 15 steht das Detektionsmodul 10 mit dem Zellenrad 2 elektrisch in Kontakt.

Das Detektionsmodul 10 mit der Logikschaltung ist im Bereich des Wellenstummels 13 innerhalb des Zellengehäuses 3 zu einer Baugruppe zusammengefasst.

Die Schleifringanordnung 11 kann mehrere voneinander unabhängige Ringkontakte aufweisen, sodass für den Fall, dass einer dieser Ringkontakte ausfällt, über mindestens einen anderen dieser unabhängigen Ringkontakte weiterhin ein sicherer elektrischer Kontakt zwischen dem Zellenrad 2 und der Signalleitung 15 über die Schleifringanordnung 11 gegeben ist. Die Schleifringanordnung 11 kann beispielsweise acht unabhängige Ringkontakte aufweisen.

Im Detektionsmodul 10 wird ein Spannungsabfall an einem auf der Logikschaltung angebrachten ohmschen Widerstands-Bauteil, das noch beschrieben wird, gemessen. Das Widerstands-Bauteil ist dabei zwischen die beiden Signalleitungen 9 und 15 geschaltet. Sobald aufgrund eines unerwünschten mechanischen Kontaktes, der auch als Anlaufen bezeichnet wird, ein elektrischer Zusatzkontakt zwischen dem Zellenradgehäuse 3 und dem Zellenrad 2 zusätzlich zum elektrischen Kontakt über die Signalleitungen 9 und 15 entsteht, führt dies zu einer charakteristischen Veränderung des über das Widerstands-Bauteil gemessenen ohmschen Widerstandes. Der unerwünschte Zusatzkontakt ist in der Fig. 1 schematisch durch eine gestrichelte Linie 16a angedeutet.

Die Logikschaltung des Detektionsmoduls 10 gibt über Ausgabeleitungen 16, 17 beispielsweise ein Zusatzkontakt-Erfassungssignal dann aus, wenn der am ohmschen Widerstands-Bauteil gemessene ohmsche Widerstand aufgrund des Zusatzkontaktes 16a einen vorgegebenen Grenzwert unterschreitet.

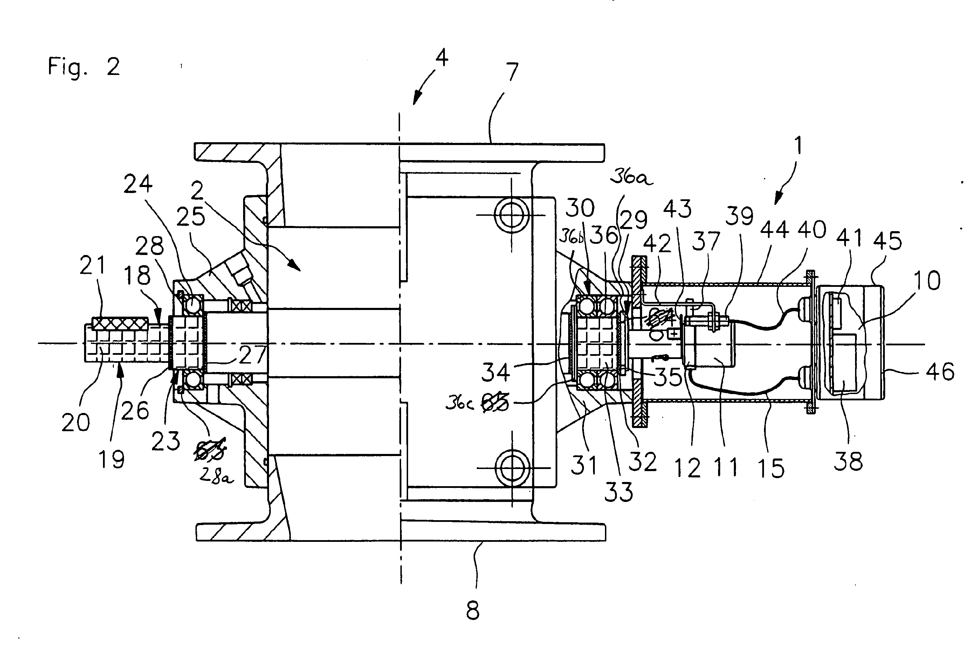

Fig. 2 zeigt Details einer ersten Ausführung der Zellenradschleuse 4. Das Zellenrad 2 hat einen antriebsseitigen Zellenradwellenabschnitt in Form eines Antriebs-Wellenstummels 18, der drehfest mit einem in der Zeichnung nicht dargestellten Zellenradantrieb verbunden ist. Antriebsseitig ist das Zellenrad 2 im Bereich des Antriebs-Wellenstummels 18 elektrisch gegenüber einer nicht dargestellten Antriebswelle des Zellenradantriebs isoliert. Hierzu dient eine elektrische Isolationseinheit 19. Diese weist eine Keramikbeschichtung 20 auf der Mantelwand des Antriebs-Wellenstummels 18 als elektrische Isolationsschicht auf.

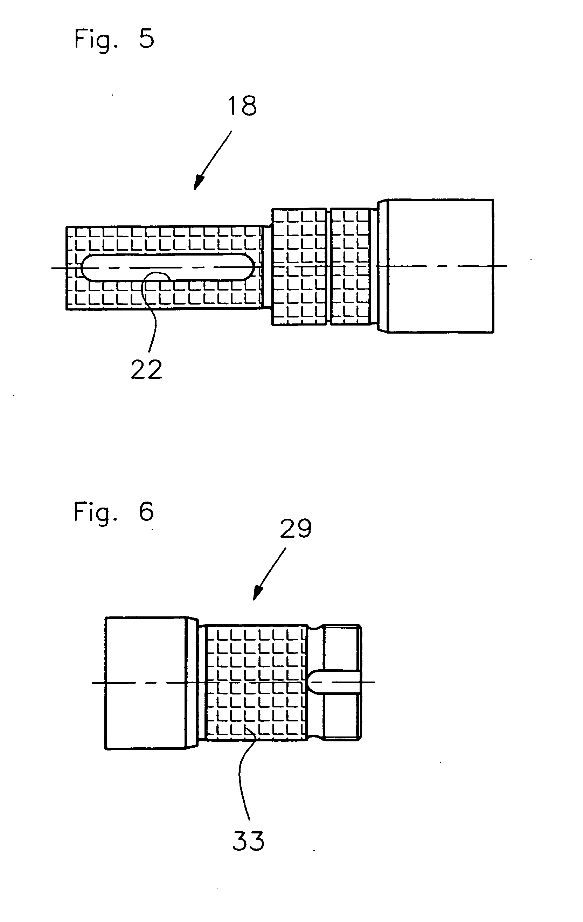

Für eine drehfeste Verbindung des Antriebs-Wellenstummels 18 mit der Antriebswelle sorgt unter anderem eine Passfeder 21, die in eine Langloch-Ausnehmung 22 (vgl. Fig. 5) im Antriebs-Wellenstummel 18 eingesteckt ist. Die Passfeder 21 ist aus Kunststoff und im beschriebenen Ausführungsbeispiel aus PEEK (Polyetheretherketon). Die Passfeder 21 ist ebenfalls ein Bestandteil der Isolationseinheit 19.

Eine weitere elektrische Isolationseinheit 23 dient zur elektrischen Isolation des Antriebs-Wellenstummels 18 gegenüber einem im Bereich eines Lagers 24 des Antriebs-Wellenstummels 18 am Zellenradgehäuse 3 angeordneten lagerseitigen Gehäuseabschnitt in Form eines Seitendeckelabschnitts 25. Zu dieser weiteren Isolationseinheit 23 gehört zunächst die Keramikbeschichtung 20, die auf dem Antriebs-Wellenstummel 18 bis zu deren Lagerabschnitt geführt ist. Weiterhin gehört zur Isolationseinheit 23 ein Paar von Isolationsringen 26, 27. Diese sind axial beabstandet zueinander am Antriebs-Wellenstummel 18 im Bereich des Lagers 24 angebracht, wobei zwischen den Isolationsringen 26, 27 ein wellenfestes Lagerteil 28 angeordnet ist. Die beiden Isolationsringe 26, 27 sind ebenfalls aus Kunststoff und im beschriebenen Ausführungsbeispiel aus PA (Polyamid), insbesondere aus PA 6. Das Lager 24 wird mit einem Befestigungsring 28a am Gehäuseabschnitt 25 axial fixiert, wobei ein temperaturbedingter Längenausgleich gewährleistet ist. Ein gehäusefestes Lagerteil des Lagers 24 ist dabei zwischen dem Befestigungsring 28a und einer Umfangsstufe im Gehäuseabschnitt 25 aufgenommen. Axial auf gleicher Höhe liegt das wellenfeste Lagerteil 28 am in der Fig. 2 rechten Isolationsring 27 an. Der Isolationsring 27 ist im Bereich einer Umfangsstufe des Antriebs-Wellenstummels 18 angebracht, die auch als Wellenabsatz bezeichnet wird. Der Isolationsring 26, der in der Fig. 2 links dargestellt ist, dient zur Vermeidung eines metallischen Kontaktes zwischen dem nicht dargestellten Antrieb und einem weiteren Wellenabsatz, also einer weiteren Umfangsstufe des Antriebs-Wellenstummels 18 im Bereich des dort angebrachten Isolationsrings 26. Die beiden Isolationsringe 26, 27 ergänzen daher die isolierende Wirkung der Keramikbeschichtung 20 im Bereich von zur Wellenachse radial verlaufender Flanken des Antriebs-Wellenstummels 18.

Ein dem Antriebs-Wellenstummel 18 gegenüberliegender Gegen-Wellenstummel 29 ist über ein weiteres Lager 30 an einem weiteren lagerseitigen Gehäuseabschnitt in Form eines weiteren Seitendeckelabschnitts 31 des Zellenradgehäuses 3 gelagert. Die beiden Wellenstummel, also der Antriebs-Wellenstummel 18 und der Gegen-Wellenstummel 29, nehmen das Zellenrad 2 zwischen sich auf. Zwischen dem Antriebs-Wellenstummel 18 und dem Zellenrad 2 einerseits und dem Gegen-Wellenstummel 29 und dem Zellenrad 2 andererseits sind noch die beiden gehäusefesten Seitendeckel der Wellenradschleuse 4 mit den Seitendeckelabschnitten 25, 31 angeordnet, die, wie vorstehend schon angesprochen, die Dosierkammern zwischen benachbarten Flügeln 6 des Zellenrads 2 ebenfalls begrenzen.

Nachfolgend werden Bauteile, die sich im Bereich des Gegen-Wellenstummels 29, also gegenüberliegend zum Zellenradantrieb finden, als "lagerseitige Bauteile" bezeichnet.

Eine weitere elektrische Isolationseinheit 32 dient zur elektrischen Isolation des Gegen-Wellenstummels 29 gegenüber dem lagerseitigen Gehäuseabschnitt 31. Zur Isolationseinheit 32 gehört zunächst eine Isolationsschicht in Form einer Keramikbeschichtung 33 auf der Mantelwand des Gegen-Wellenstummels 29 im Axialbereich des Lagers 30. Zur Isolationseinheit 32 gehört weiterhin ein Paar von Isolationsringen 34, 35, die am über die Keramikbeschichtung 33 isolierten Abschnitt des Gegen-Wellenstummels 29 axial beabstandet zueinander angebracht sind und zwischen denen ein wellenfestes Lagerteil 36 des Lagers 30 angeordnet ist. Die Isolationsringe 34, 35 sind aus dem gleichen Material wie die Isolationsringe 26, 27. Das Lager 30 ist mit einer Befestigungsmutter 36a über ein Gewinde auf dem Gegen-Wellenstummel 29 und eine Umfangsstufe 36b im Gehäuseabschnitt 31, also einem Gehäuseabsatz, axial fixiert, wobei hier ebenfalls ein thermischer Längenausgleich gewährleistet bleibt. Zwischen dem Lager 30 und dem in der Fig. 2 links dargestellten Isolationsring 34 sind Scheiben oder Tellerfedern 36c zur axialen Fixierung des Lagers 30 angeordnet. Die beiden Isolationsringe 34, 35 dienen entsprechend dem, was vorstehend zu den Isolationsringen 26 und 27 ausgeführt wurde, wiederum zur elektrischen Isolation radial verlaufender Umfangsstufen, also Wellenabsätzen des Gegen-Wellenstummels 29. Der Isolationsring 35 ist zwischen der Befestigungsmutter 36a und dem wellenfesten Lagerteil 36 angeordnet.

Der Gegen-Wellenstummel 29 setzt sich bis zur Schleifringanordnung 11 fort. Das gehäusefeste Schleifring-Bauteil 12 ist über einen Haltestift 37 am Zellenradgehäuse 3 festgelegt.

Fig. 6 zeigt den Gegen-Wellenstummel 29, wobei eine den Fortsatz hin zur Schleifringanordnung 11 bildende Adapterhülse weggelassen ist. Dargestellt ist insbesondere die Keramikbeschichtung 33.

Die im Detektionsmodul 10 untergebrachte Logikschaltung 38 (vgl. Fig. 2) steht mit einem Drehzahlsensor 39 zur Bestimmung einer Drehzahl des Zellenrades 2 im Zellenradgehäuse 3 über eine Signalleitung 40 und eine Drehzahl-Auswerteschaltung 41 in Signalverbindung. Der Drehzahlsensor 39 ist an einem gehäusefesten Haltearm 42, der auch den Haltestift 37 trägt, festgelegt. Der Drehzahlsensor 39 wirkt induktiv mit einer Schaltfahne 43 zusammen, die drehfest mit dem Gegen-Wellenstummel 29 verbunden ist.

Das Detektionsmodul 10, der Drehzahlsensor 39 und die Schleifringanordnung 11 sind in bzw. an einem Gehäusefortsatz 44 des Zellenradgehäuses 3 untergebracht und zu der Detektionseinrichtung 1 in Form einer Baugruppe zusammengefasst. Das Detektionsmodul 10 weist ein Gehäuse 45 mit einem stirnseitigen Sichtfenster 46 auf.

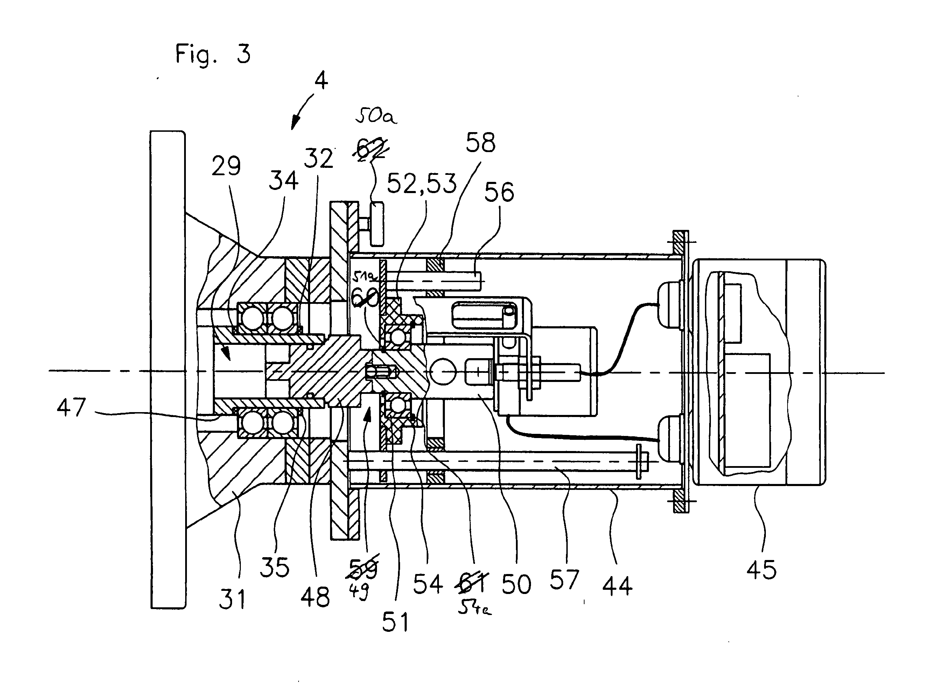

Fig. 3 zeigt eine weitere Ausführung der Zellenradschleuse 4 im Bereich des Gegen-Wellenstummels 29 und der Detektionseinrichtung 1.

Komponenten, die denjenigen entsprechen, die vorstehend unter Bezugnahme auf die Fig. 1, 2, 5 und 6 bereits erläutert wurden, tragen die gleichen Bezugsziffern und werden nicht nochmals im Einzelnen diskutiert.

Der Gegen-Wellenstummel 29 ist bei der Ausführung nach Fig. 3 zweiteilig ausgeführt und hat einen zellenradseitigen Stummelabschnitt 47 und einen detektionsseitigen Stummelabschnitt 48. Die beiden Stummelabschnitte 47, 48 sind miteinander verschraubt.

Mit dem detektionsseitigen Stummelabschnitt 48 axial über eine Zweifach-Kupplung 49 verbunden ist eine Adapterhülse 50, die wiederum die detektionsseitige Fortsetzung des Gegen-Wellenstummels 29 bildet. Im Unterschied zur Ausführung nach Fig. 2 ist bei der Ausführung nach Fig. 3 die Adapterhülse 50 am Gehäusefortsatz 44 über ein weiteres Lager 51 gelagert. Die Detektionseinrichtung 1 kann aufgrund der Zweifach-Kupplung 49 in einfacher Weise vom Gegen-Wellenstummel 29 bei einer Demontage abgezogen werden. Hierzu werden Rändelschrauben gelöst, von denen in der Fig. 3 beispielhaft eine Rändelschraube 50a dargestellt ist. Das Lager 51 ist mit einem Befestigungsring 51a, der in der Fig. 3 links vom Lager 51 dargestellt ist, an der Adapterhülse 50 axial fixiert. Hierzu ist das Lager zwischen dem Befestigungsring 51a und einer Umfangsstufe, die auch als Wellenabsatz bezeichnet wird, der Adapterhülse 50 angeordnet.

Zur elektrischen Isolation des Gegen-Wellenstummels 29 gegenüber dem Gehäuseabschnitt 31 dient neben der Isolationseinheit 32, die in diesem Fall den zellenradseitigen Stummelabschnitt 47 gegenüber dem Gehäuseabschnitt 31 elektrisch isoliert, noch eine weitere Isolationseinheit 52.

Bei der Isolationseinheit 32 der Ausführung nach Fig. 3 ist die Randbeschichtung 33 auf dem zellenradseitigen Stummelabschnitt 47 aufgebracht. Der zellenradseitige Stummelabschnitt 47 trägt in diesem Fall auch die beiden Isolationsringe 34, 35.

Die weitere Isolationseinheit 52 zur Isolation des Gegen-Wellenstummels 29 gegenüber dem Zellenradgehäuse 3 dient speziell zur elektrischen Isolation der Adapterhülse 50 gegenüber dem Gehäusefortsatz 44. Hierzu dient eine Isolierhülse 53, die ein gehäusefestes Lagerteil 54 des Lagers 51 umgibt. Ein weiterer Befestigungsring 54a dient zur axialen Fixierung des gehäusefesten Lagerteils 54 des Lagers 51 an der Isolierhülse 53. Der Befestigungsring 54a ist an der Isolierhülse 53 festgelegt. Das gehäusefeste Lagerteil 54 des Lagers 51 ist axial zwischen dem Befestigungsring 54a und einer Umfangsstufe der Isolierhülse 53 fixiert. Die Isolierhülse 53 ist über eine Halteplatte 55, Gewindestifte 56, von denen in der Fig. 3 lediglich einer dargestellt ist, sowie Führungsstangen 57, von denen in der Fig. 3 ebenfalls nur einer dargestellt ist, an einem Gehäusering 58 am Gehäusefortsatz 44 festgelegt. Die beiden Gewindestifte 56 dienen zum Einstellen bzw. zum Justieren der Position, insbesondere der axialen Position, der verbindenden Teile der Zweifach-Kupplung 49 einerseits an der Adapterhülse 50 und andererseits am Stummelabschnitt 48.

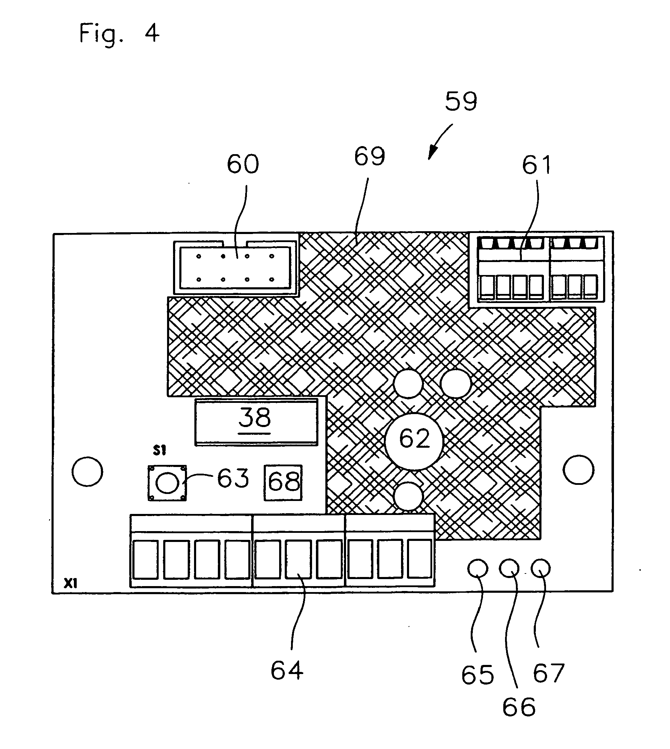

Fig. 4 zeigt im Detail eine Platine 59, auf der unter anderem die Logikschaltung 38 in Form eines Mikroprozessors untergebracht ist. Auf der Platine 59 weiterhin untergebracht sind ein Programmierstecker 60 zum Anschluss eines externen Rechners zur Programmierung der Logikschaltung 38, eine interne Kabelanschlussleiste 61, das ohmsche Widerstands-Bauteil 62, dessen Widerstand im Rahmen des Betriebs der Detektionseinrichtung 1 vermessen wird und das zwischen die beiden Signalleitungen 9 und 15 (vgl. Fig. 1) geschaltet ist, ein Reset-Knopf 63, eine weitere Kabelanschlussleite 64 zur Anbindung externer Komponenten und drei Leuchtdioden (LEDs) 65, 66 und 67. Die LED 65 zeigt an, wenn ein elektrischer Zusatzkontakt erfasst wurde. Die LED 66 zeigt einen Kabelbruch an, zeigt also an, wenn anstelle des Widerstandes des ohmschen Widerstands-Bauteils 62 ein zu hoher Widerstand gemessen wird. Die LED 67 zeigt die Betriebsbereitschaft der Detektionseinrichtung 1 an.

Der ohmsche Widerstand des Widerstands-Bauteils 62 ist kleiner als 1MΩ und hat bei der dargestellten Ausführung 50kΩ.

Die Logikschaltung 38 steht mit einem ebenfalls auf der Platine 59 untergebrachten Datenspeicher 68 in Signalverbindung. Der Datenspeicher 68 dient der Abspeicherung von Zeitdaten zum Auftreten von Zusatzkontakten.

Das Zellenradgehäuse 3 und das Zellenrad 2 sind aus elektrisch leitfähigem Material, nämlich aus Metall.

Die Logikschaltung 38 ist derart ausgeführt, dass sie nach dem Erfassen eines ersten Zusatzkontaktes ein Zeitfenster setzt, innerhalb dem das Auftreten mindestens eines weiteren Zusatzkontaktes bei gleichzeitiger Erfüllung weiterer, von der Logikschaltung 38 überwachter Bedingungen, zum Ausgeben eines Fehlersignals führt. Gleichzeitig mit dem Ausgeben des Fehlersignals über die Ausgabeleitungen 16, 17 (vgl. Fig. 1) wird dann die LED 65 angesteuert, sodass über das Sichtfenster 46 eine optische Kontrolle des Auftretens eines unerwünschten Kontaktes zwischen dem Zellenrad 2 und dem Zellenradgehäuse 3 erfasst werden kann.

Weitere Bedingungen, die zum Ausgeben eines Fehlersignals erfüllt sein müssen, können innerhalb der Logikschaltung 38 insbesondere vom Drehzahlsensor 39 abgeleitet werden. Ein besonders langer Zusatzkontakt im Vergleich zur Umdrehungszeit des Zellenrads 2 oder ein mit der Drehzahl korreliertes Auftreten von Zusatzkontakten kann dann zum Ausgeben des Fehlersignals führen.

Die einzelnen Bauelemente auf der Platine 59 sind in eine Vergussmasse 69 eingebettet, sodass eine Manipulation der Detektionseinrichtung 1 ausgeschlossen ist.

## Patentansprüche

1. Zellenradschleuse (4)
- mit einem Zellenradgehäuse (3) aus elektrisch leitfähigem Material,
- mit einem im Zellenradgehäuse (3) umlaufenden Zellenrad (2) aus elektrisch leitfähigem Material,
- wobei ein elektrischer Kontakt zwischen dem Zellenradgehäuse (3) und dem Zellenrad (2) über ein ohmsches Widerstandsbauteil (62) gegeben ist, dessen ohmscher Widerstand kleiner ist als 1MΩ,
- wobei eine Logikschaltung (38) vorhanden ist, die beim Betrieb der Zellenradschleuse (4) einen elektrischen Zusatzkontakt (16a) zwischen dem Zellenradgehäuse (3) und dem Zellenrad (2) zusätzlich zum elektrischen Kontakt über das Widerstandsbauteil (62) erfasst.

2. Zellenradschleuse nach Anspruch 1, **dadurch gekennzeichnet, dass** die Logikschaltung (38) den elektrischen Zusatzkontakt (16a) auf Basis einer Messung des ohmschen Widerstandes zwischen dem Zellenradgehäuse (3) und dem Zellenrad (2) erfasst.

3. Zellenradschleuse nach Anspruch 1 oder 2, **dadurch gekennzeichnet, dass** die Logikschaltung (38) mit einem Drehzahlsensor (39) für eine Drehzahl des Zellenrades (2) in Signalverbindung steht.

4. Zellenradschleuse nach einem der Ansprüche 1 bis 3, **gekennzeichnet durch** eine elektrische Isolationseinheit (23; 32) zur Isolation eines Zellenradwellenabschnitts (18; 29) gegenüber einem
Gehäuseabschnitt (25; 31), die eine Isolationsschicht (20; 33) auf dem Wellenabschnitt (18; 29) aufweist.

5. Zellenradschleuse nach Anspruch 4, **dadurch gekennzeichnet, dass** die Isolationsschicht (20; 33) als Keramikbeschichtung ausgeführt ist.

6. Zellenradschleuse nach Anspruch 4 oder 5, **dadurch gekennzeichnet, dass** die elektrische Isolationseinheit (23; 32) mindestens einen Isolationsring (26, 27; 34, 35) aufweist, der an dem isolierten Wellenabschnitt (18; 29) insbesondere im Bereich einer Umfangsstufe von diesem angebracht ist.

7. Zellenradschleuse nach einem der Ansprüche 1 bis 6, **gekennzeichnet durch** eine elektrische Isolationseinheit (52) zur Isolation eines Zellenradwellenabschnitts (50) gegenüber einem Gehäuseabschnitt (44), die eine Isolierhülse (53) aufweist, die ein gehäusefestes Lagerteil (54) umgibt.

8. Zellenradschleuse nach einem der Ansprüche 1 bis 7, **gekennzeichnet durch** eine weitere elektrische Isolationseinheit (19) zur Isolation eines antriebsseitigen Zellenradwellenabschnitts (18) gegenüber einer Antriebswelle, die eine Isolationsschicht (20) auf dem antriebsseitigen Wellenabschnitt (18) aufweist.

9. Zellenradschleuse nach Anspruch 8, **dadurch gekennzeichnet, dass** die weitere elektrische Isolationseinheit (19) eine Passfeder (21) aus Kunststoff zwischen dem antriebseitigen Zellenradwellenabschnitt (18) und der Antriebswelle aufweist.

10. Zellenradschleuse nach einem der Ansprüche 1 bis 9, **dadurch gekennzeichnet, dass** die Logikschaltung (38) gehäusefest angeordnet ist und in elektrischem Kontakt mit dem Zellenrad über eine Schleifringanordnung (11) steht, die mehrere unabhängige Ringkontakte aufweist.

11. Zellenradschleuse nach einem der Ansprüche 1 bis 10, **dadurch gekennzeichnet, dass** die Logikschaltung (38) mit einem Datenspeicher (68) zur Abspeicherung von Zeitdaten zum Auftreten von Zusatzkontakten in Signalverbindung steht.

12. Zellenradschleuse nach einem der Ansprüche 1 bis 11, **dadurch gekennzeichnet, dass** die Logikschaltung (38) im Bereich eines Wellenstummels (29) des Zellenrades (2), der mit dem Zellenrad (2) über eine Kupplung (49) drehfest verbunden ist, als Baugruppe zusammengefasst ist.

13. Zellenradschleuse nach einem der Ansprüche 1 bis 12, **dadurch gekennzeichnet, dass** die Logikschaltung (38) eine optische Zusatzkontaktanzeige (65) aufweist, die direkt über ein Gehäusefenster (46) ablesbar ist.

14. Zellenradschleuse nach einem der Ansprüche 1 bis 13, **dadurch gekennzeichnet, dass** die Logikschaltung (38) derart ausgeführt ist, dass sie nach dem Erfassen eines ersten Zusatzkontaktes (16a) ein Zeitfenster setzt, innerhalb dem das Auftreten wenigstens eines weiteren Zusatzkontaktes (16a) bei gleichzeitiger Erfüllung weiterer, von der Logikschaltung (38) überwachter Bedingungen, zum Ausgeben eines Fehlersignals führt.

## Claims

1. Cellular wheel sluice (4)
- comprising a cellular wheel housing (3) made of electrically conductive material,
- and a cellular wheel (2) rotating in the cellular wheel housing (3) made of electrically conductive material,
- wherein an electrical contact is provided between the cellular wheel housing (3) and the cellular wheel (2) via an ohmic resistance component (62), the ohmic resistance of which is less than 1MΩ,
- wherein a logic circuit (38) is provided which during the operation of the cellular wheel sluice (4) registers an electrical additional contact (16a) between the cellular wheel housing (3) and the cellular wheel (2) in addition to the electrical contact via the resistance component (62).

2. Cellular wheel sluice according to claim 1, **characterised in that** the logic circuit (38) registers the additional electrical contact (16a) on the basis of a measurement of the ohmic resistance between the cellular wheel housing (3) and the cellular wheel (2).

3. Cellular wheel sluice according to claim 1 or 2, **characterised in that** the logic circuit (38) is in signal connection with a speed sensor (39) for a speed of the cellular wheel (2).

4. Cellular wheel sluice according to any one of claims 1 to 3, **characterised by** an electrical insulation unit (23; 32) for the insulation of a cellular wheel shaft section (18; 29) from a housing section (25; 31) which has an insulation layer (20; 33) on the shaft section (18; 29).

5. Cellular wheel sluice according to claim 4, **characterised in that** the insulation layer (20; 33) is in the form of a ceramic coating.

6. Cellular wheel sluice according to claim 4 or 5, **characterised in that** the electrical insulation unit (23; 32) comprises at least one insulation ring (26, 27; 34, 35), which is attached to the insulated shaft section (18; 29) in particular in the area of a circumferential stage of the latter.

7. Cellular wheel sluice according to any one of claims 1 to 6, **characterised by** an electrical insulation unit (52) for the insulation of a cellular wheel shaft section (50) from a housing section (44) comprising an insulating sleeve (53) which surrounds a housing-secure bearing element (54).

8. Cellular wheel sluice according to any one of claims 1 to 7, **characterised by** a further electrical insulation unit (19) for the insulation of a drive-side cellular wheel shaft section (18) from a drive shaft which has an insulation layer (20) on the drive-side shaft section (18).

9. Cellular wheel sluice according to claim 8, **characterised in that** the additional electrical insulation unit (19) comprises a feather key (21) made of plastic between the drive-side cellular wheel shaft section (18) and the drive shaft.

10. Cellular wheel sluice according to any one of claims 1 to 9, **characterised in that** the logic circuit (38) is fixed to the housing and is in electrical contact with the cellular wheel by a slip ring arrangement (11) which comprises a plurality of independent ring contacts.

11. Cellular wheel sluice according to any one of claims 1 to 10, character-ised in that the logic circuit (38) is in signal connection with a data memory (68) for saving time data for the appearance of additional contacts.

12. Cellular wheel sluice according to any one of claims 1 to 11, character-ised in that the logic circuit (38) is combined as a component group in the region of a shaft stub (29) of the cellular wheel (2) which is connected in a non-rotational manner to the cellular wheel (2) via a coupling (49).

13. Cellular wheel sluice according to any one of claims 1 to 12, **characterised in that** the logic circuit (38) comprises an additional optical contact display (65) which can be read directly through a housing window (46).

14. Cellular wheel sluice according to any one of claims 1 to 13, **characterised in that** the logic circuit (38) is configured such that after registering a first additional contact (16a) it sets a time window within which the appearance of at least one additional contact (16a), simultaneously to satisfying additional conditions monitored by the logic circuit (38), leads to the output of an error signal.

## Revendications

1. Vanne à roue cellulaire (4)
- comprenant un carter de roue cellulaire (3) constitué d'un matériau conducteur d'électricité,
- comprenant une roue cellulaire (2), constituée d'un matériau conducteur d'électricité, tournant dans le carter de roue cellulaire (3),
- un contact électrique étant installé entre le carter de roue cellulaire (3) et la roue cellulaire (2) par l'intermédiaire d'un dispositif à résistance ohmique (62) dont la résistance ohmique est inférieure à 1 MΩ,
- un circuit logique (38) étant présent, qui, lors du fonctionnement de la vanne à roue cellulaire (4), comprend, complémentairement au contact électrique, un contact électrique additionnel (16a) entre le carter de roue cellulaire (3) et la roue cellulaire (2) par l'intermédiaire du dispositif à résistance (62).

2. Vanne à roue cellulaire selon la revendication 1 **caractérisée en ce que** le circuit logique (38) comprend le contact électrique additionnel (16a) sur la base d'une mesure de la résistance ohmique entre le carter de roue cellulaire (3) et la roue cellulaire (2).

3. Vanne à roue cellulaire selon les revendications 1 ou 2 **caractérisée en ce que** le circuit logique (38) est en relation par signal avec un capteur de mesure du nombre de tours (39) pour un nombre de tours de la roue cellulaire (2).

4. Vanne à roue cellulaire selon l'une des revendications de 1 à 3 **caractérisée par** une unité d'isolation électrique (23 ; 32), qui présente une couche d'isolation (20 ; 33) sur la section d'arbre (18 ; 29), pour l'isolation d'une section d'arbre de la roue cellulaire (18 ; 29) par rapport à une section de carter (25 ; 31).

5. Vanne à roue cellulaire selon la revendication 4 **caractérisée en ce que** la couche d'isolation (20 ; 33) est conçue sous la forme d'un revêtement en céramique.

6. Vanne à roue cellulaire selon les revendications 4 ou 5 **caractérisée en ce que** l'unité d'isolation électrique (23 ; 32) présente au moins une bague d'isolation (26, 27 ; 34, 35) qui est rapportée sur la section d'arbre (18 ; 29) isolée, en particulier dans la zone d'un rebord périphérique de celle-ci.

7. Vanne à roue cellulaire selon l'une des revendications de 1 à 6 **caractérisée par** une unité d'isolation électrique (57), pour l'isolation d'une section d'arbre de roue cellulaire (50) par rapport à une section de carter (44), qui présente une enveloppe d'isolation (53) qui entoure une partie de palier (54) faisant corps avec le carter.

8. Vanne à roue cellulaire selon l'une des revendications de 1 à 7 **caractérisée par** une unité d'isolation électrique (19) supplémentaire pour l'isolation d'une section d'arbre de roue cellulaire (18), située du côté de l'entraînement, par rapport à un arbre d'entraînement, qui présente une couche d'isolation (20) sur la section d'arbre (18) située du côté de l'entraînement.

9. Vanne à roue cellulaire selon la revendication 8 **caractérisée en ce que** l'unité d'isolation électrique supplémentaire (19) présente une clavette (21) en matière synthétique entre la section d'arbre de la roue cellulaire (18) située du côté de l'entraînement et l'arbre d'entraînement.

10. Vanne à roue cellulaire selon l'une des revendications de 1 à 9 **caractérisée en ce que** le circuit logique (38) est disposé faisant corps avec le carter et est en contact électrique avec la roue cellulaire par l'intermédiaire d'un ensemble de bagues collectrices (11), qui présente plusieurs contacts annulaires indépendants.

11. Vanne à roue cellulaire selon l'une des revendications de 1 à 7 **caractérisée en ce que** le circuit logique (38) est en relation par signaux avec un enregistreur de données (68) pour l'enregistrement de données en temps de l'occurrence des contacts additionnels.

12. Vanne à roue cellulaire selon l'une des revendications de 1 à 11 **caractérisée en ce que** le circuit logique (38) est conçu comme un bloc de construction dans la zone d'un bout d'arbre (29) de la roue cellulaire (2), bout qui relié solidement, sans pouvoir tourner, avec la roue cellulaire (2) par l'intermédiaire d'un embrayage (49).

13. Vanne à roue cellulaire selon l'une des revendications de 1 à 12 **caractérisée en ce que** le circuit logique (38) présente un indicateur de contact optique additionnel (65) qui peut être lu directement par une fenêtre du carter (46).

14. Vanne à roue cellulaire selon l'une des revendications de 1 à 13 **caractérisée en ce que** le circuit logique (38) est conçu de telle manière qu'il pose un créneau horaire après la saisie d'un premier contact additionnel (16a), créneau horaire pendant lequel il y a occurrence d'au moins un autre contact additionnel (16a) pour la réalisation simultanée d'autres conditions surveillées par le circuit logique (38), provoquant l'émission d'un signal d'erreur.
